(19) Europäisches Patentamt

European Patent Office

Office européen des brevets

(11) Veröffentlichungsnummer : **0 289 531 B1**

## (12) EUROPÄISCHE PATENTSCHRIFT

(45) Veröffentlichungstag der Patentschrift :
**03.06.92 Patentblatt 92/23**

(51) Int. Cl.⁵ : **B29C 63/16, B29C 51/16**

(21) Anmeldenummer : **87906569.6**

(22) Anmeldetag : **25.09.87**

(86) Internationale Anmeldenummer :
**PCT/EP87/00545**

(87) Internationale Veröffentlichungsnummer :
**WO 88/02305 07.04.88 Gazette 88/08**

(54) **VERFAHREN UND VORRICHTUNG ZUR KUNSTSTOFFBESCHICHTUNG VON DREIDIMENSIONALEN KÖRPERN.**

(30) Priorität : **29.09.86 DE 3633097**
**09.03.87 DE 8703503 U**

(43) Veröffentlichungstag der Anmeldung :
**09.11.88 Patentblatt 88/45**

(45) Bekanntmachung des Hinweises auf die
Patenterteilung :
**03.06.92 Patentblatt 92/23**

(84) Benannte Vertragsstaaten :
**AT CH DE FR GB IT LI**

(56) Entgegenhaltungen :
**DE-A- 1 946 051**
**DE-A- 2 353 460**
**DE-A- 2 551 768**
**DE-A- 3 017 273**
**DE-A- 3 338 513**
**DE-C- 1 183 353**

(56) Entgegenhaltungen :
**FR-A- 1 264 154**
**FR-A- 1 312 836**
**FR-A- 1 353 079**
**FR-A- 2 287 317**
**GB-A- 472 796**
**GB-A- 925 339**
**US-A- 1 856 694**
**US-A- 2 419 758**
**US-A- 3 566 650**

(73) Patentinhaber : **Diekwisch, Rita**
**Im Grossen Siek 85**
**W-4900 Herford (DE)**

(72) Erfinder : **Diekwisch, Rita**
**Im Grossen Siek 85**
**W-4900 Herford (DE)**

(74) Vertreter : **TER MEER - MÜLLER -**
**STEINMEISTER & PARTNER**
**Artur-Ladebeck-Strasse 51**
**W-4800 Bielefeld 1 (DE)**

EP 0 289 531 B1

## Beschreibung

Verfahren zur Kunststoffbeschichtung von dreidimensionalen Körpern, bei dem eine Kunststoff-Folie auf einen Körpe aufgelegt und unter Erwärmung mit Hilfe eines Druckkissens einer Membranpresse angedrückt wird, deren Membran so flexibel ist, daß sie sich vollständig glatt gegen die äußeren Ränder des zu beschichtenden Körpersdrücken läßt.

Anstelle einer anderweitigen Oberflächenbehandlung eines Körpers, beispielsweise eines Möbelteils, ist es vielfach einfacher, den Körper mit einer Kunststoff-Folie zu beschichten. Dies gilt beispielsweise für Spanplatten in der Möbelindustrie zur Herstellung der einzelnen Bauteile, inbesondere Türen und Frontplatten von Schrankmöbeln. Spanplatten wurden zunächst insgesamt auf beiden Seiten mit Kunststoff beschichtet und anschließend zu einzelnen Möbelteilen zurechtgeschnitten, deren umlaufende Ränder dann mit Hilfe sogenannter Umleimer abgedeckt wurden. Bei plattenförmigen Möbelteilen mit ausreichend abgerundeten Ecken und Kanten besteht unter gewissen Voraussetzungen die Möglichkeit, mit einer zusammenhängenden Kunststoff-Folie gleichzeitig etwa die Frontfläche und zwei einander gegenüberliegende Ränder zu beschichten.

Es ist jedoch bisher nicht befriedigend gelungen, zugleich die gesamten umlaufenden Ränder einer Platte zusammen mit der einen Hauptfläche mit einer zusammenhängenden Kunststoff-Folie zu beschichten. Dies beruht darauf, daß sich an den Ecken oder Krümmungen der Außenkontur ein Materialüberschuß in der Kunststoff-Folie ergibt, der zu einer Faltenbildung und zugleich einem unzureichenden Anhaften der Kunststoff-Folie führt. Eine gewisse Abhilfe kann durch Einschneiden der Kunststoff-Folie in den Eckbereichen und überlappende Befestigung geschaffen werden, jedoch bleiben die Schnittlinien in der Regel in störender Weise sichtbar.

Beim Beschichten von Körpern mit Hilfe von Kunststoff-Folien ist neben der Verwendung eines geeigneten Klebstoffs eine Erwärmung der Kunststoff-Folien notwendig. Membranpressen ermöglichen eine derartige Erwärmung dadurch, daß in dem Druckraum hinter der Membran Wärmestrahler oder andere geeignete Heizeinrichtungen angeordnet sind, so daß die Folie beim Auftreffen der Membran durch die Membran hindurch erwärmt wird. Dies kann jedoch je nach Art der verwendeten Folie dazu führen, daß diese so stark an der Membran anhaftet, daß sie beim Anheben der Membran nach dem Beschichtungsvorgang von der Membran wieder mitgenommen wird. Dies führt naturgemäß zu erheblichen Betriebsverzögerungen und Kosten. Weitere Schwierigkeiten können sich in der Praxis dadurch ergeben, daß beim Auflegen der Membran auf die Kunststoff-Folie Lufteinschlüsse entstehen, in deren Bereich die Membran nicht mit dem erforderlichen Druck auf die Kunststoff-Folie einwirken kann.

Die DE-C 1 183 353 beschreibt ein Verfahren, bei dem eine Kunststoff-Folie mit Hilfe des Vakuumtiefziehverfahrens auf einen Gegenstand aufgezogen wird. Im Gegensatz zum üblichen Verfahren wird nach dieser Druckschrift die Folie nicht eingespannt. Beim Vakuumtiefziehen steht selbst bei hohem Vakuum höchsten der Atmosphärendruck von 1 bar zum Andrücken der Folie zur Verfügung. Dieser Druck reicht zur dauerhaften Beschichtung von Möbelteilen oder dergleichen nicht aus. Es wird daher die Möglichkeit erwähnt, den Andruck durch einer aus einer Kolbenstange und einem Pressfuß bestehenden Anordnung zu Unterstützen. Dieser Pressfuß soll vorteilhafter Weise der Form des zu überziehenden Werkstückes angepaßt sein. Dies bedeutet zum einen, daß eine Beschichtung um die Kanten des Werkstücks herum nicht möglich ist, und im übrigen ist für jeden Werkstücktyp ein gesonderter Pressfuß erforderlich.

Die DE-A-3 017 273 zeigt und beschreibt eine Membranformpresse, bei der sich hinter der Membran, also im Inneren des Druckkissens verschiedene Stützorgane befinden, die die Membran beim Herumlegen um ein kontoriertes Werkstück unterstützen. Ein Rahmen zwischen dem Tisch und der Membran, der die Beschichtungsfolie einspannt, ist nicht vorgesehen. Ein Einspannen der Folie ist offensichtlich auch nicht beabsichtigt, da der das Werkstück kaum an den Rändern überragende Folienzuschnitt von einem Spannrahmen nicht erfaßt werden könnte.

Der Erfindung liegt die Aufgabe zugrunde, eine Vorrichtung der eingangs genannten Art zu schaffen, die es gestattet, einen dreidimensionalen Körper, insbesondere einen plattenförmigen Körper, in einem Arbeitsgang mit einer zusammenhängenden Kunststoff-Folie auf einer Hauptfläche und dem gesamten umlaufenden Rand ohne Faltenbildung in den Ecken in einer von Betriebsstörungen freien Art und Weise dauerhaft zu beschichten.

Diese Aufgabe wird erfindungsgemäß bei einem Verfahren der eingangs genannten Art dadurch gelöst, daß die Folie durch einen den Körper mit Abstand umgebenden Rahmen eingespannt wird und daß die Folie beim Andrücken mit Hilfe des Druckkissens durch den Rahmen gehalten wird.

Durch den Rahmen wird die Folie gespannt und leicht gedehnt. Eine verstärkte Dehnung findet im Bereich von Vorsprüngen am Umriß des Körpers statt, also etwa an den vier Ecken einer rechteckigen Platte, an denen es bei dem bekannten Verfahren zu einer Faltenbildung kam. Durch verstärkte Dehnung in diesen Bereichen wird überschüssiges Material abgezogen, und zugleich wird die Folie der Kontur des Körpers angepaßt.

Eine erfindungsgemäße Membranpresse durch Durchführung dieses Verfahrens umfaßt einen Tisch zur Aufnahme eines zu beschichtenden Körpers, ein absenkbares Druckkissen zum Andrücken einer Kunststoff-Folie an den Körper und eine Heizeinrichtung zur Erwärmung der Kunststoff-Folie. Die Membranpresse ist gekennzeichnet durch einen dem Umriß des Körpers mit Abstand folgenden, absenkbaren Rahmen zum Einspannen der Kunststoff-Folie.

Bei einer weiteren Ausführungsform dir Erfindung wird durch Auflegen des Rahmens auf die Folie und Andrücken gegen den Tisch die Folie auf dem gesamten Umfang des Körpers fest eingespannt. Beim anschließenden Erwärmen und Dehnen der Folie steht daher nur das auf dem Körper liegende und diesen streifenförmig umgebende Folienmaterial innerhalb der Rahmenfläche zur Verfügung. Das Folienmaterial wird daher in erheblichem Maße gestreckt. Dies gilt vor allem für den Bereich von Ecken des Körpers, in denen wegen des gegenüber dem Seitenabstand größeren Diagonalabstandes zwischen Körper und Rahmen eine noch stärkere Dehnung stattfindet. Im Zuge dieser sehr starken Verformung paßt sich das Folienmaterial vollständig an die Ecken des Körpers an, ohne daß eine Faltenbildung entsteht.

Vorzugsweise sind ein unteres Rahmenteil, das dem Tisch zugeordnet ist und auf das die Folie aufgelegt wird, und ein deckungsgleiches oberes Rahmenteil vorgesehen, das auf die Folie gelangt und diese zusammen mit dem unteren Rahmenteil einspannt. Das untere Rahmenteil kann ständig auf dem Tisch verbleiben oder sogar integraler Bestandteil des Tisches sein.

Der Rahmen befindet sich vorzugsweise im Wirkbereich des Druckkissens. In diesem Falle sind keine zusätzlichen Maßnahmen zum Andrücken des Rahmens bzw. des oberen Rahmenteils gegen die Folie erforderlich. Vielmehr wird der Rahmen, der auf der Folie liegt, bereits bei Beginn des Andrückvorganges durch das Druckkissen erfaßt und fest nach unten gedrückt.

Bei Membranpressen mit verhältnismäßig großem Tisch ist es zweckmäßig, kleinere Körper in einer größeren Stückzahl in einem Arbeitsgang zu beschichten. Diese Körper werden daher rasterförmig auf dem Tisch angeordnet, und der Rahmen ist in entsprechender Weise rasterförmig ausgebildet, so daß er alle Körper in gleicher Weise umgibt.

Eine zusätzliche Verbesserung bei der Beschichtung von Spanplatten kann sich durch Absaugen der Platten ergeben. Spanplatten, insbesondere Holzstaub-Spanplatten, sogenannte MDF-Platten, sind stark luftdruchlässig und daher gut absaugbar. Bei der Kunststoffbeschichtung müssen an der Rückseite der Platten ohnehin Bohrungen vorgesehen sein, die die Kunstharzbeschichtung der Rückseite durchdringen und den Austritt von Luft bzw. Gasen ermöglichen, die sich durch Erwärmung der Platten, durch Klebstoffverdunstung und dergleichen beim Beschichten sammeln. An diese Bohrungen können Saugleitungen angeschlossen werden. Das Absaugen bewirkt, daß der Klebstoff tief in die Poren der Spanplatte hineingezogen wird und sich fest verankert.Im übrigen ergibt sich eine noch glattere Anlage der Folie.

Eine weitere Ausführungsform umfaßt einen den Körper umgebenden und dessen Umriß mit Abstand folgenden, auf die Kunststoffolie auflegbaren und diese gegen den Tisch andrückenden Rahmen, in dem Bohrungen zur Entlüftung und/oder Luftzufuhr vorgesehen sind.

Die Bohrungen in dem Rahmen ermöglichen es zunächst, daß die in dem sich bildenden Raum zwischen der Kunststoffolie, der Membran und dem Rahmen fangende Luft durch den Rahmen nach außen entweichen kann. Die Membran kann sich also auf der gesamten Fläche gegen die Kunststoffolie anlegen. Ferner können die Bohrungen auch nach Durchführung eines Beschichtungsvorganges zum Einleiten von Luft oder einem anderen Kühlgas verwendet werden, das einerseits die Folie kühlt und andererseits die Folie und die Membran auseinanderdrückt, so daß die Kunststoffolie von der Membran gelöst und nicht von dieser beim Anheben des Druckkissens abgezogen wird.

Die Entlüftung einerseits und das Einleiten eines Kühlgases andererseits können über gesonderte Bohrungen in dem Rahmen erfolgen. Es können aber auch ein und dieselben Bohrungen verwendet werden, die an ein Kanalsystem angeschlossen sind, das zwischen einer Verbindung zur Umgebung, ggf. auch mit einer Unterdruckquelle, und einer Verbindung mit einer Kühlgasquelle umschaltbar ist.

Der Rahmen ist vorzugsweise federnd unterhalb des Druckkissens aufgehängt, so daß er automatisch mit diesem abgesenkt und angehoben wird und beim Absenken vor dem Drucklissen auf die Kunststoffolie trifft und diese in Verbindung mit dem Tisch einspannt.

Im Interesse einer vollständigen Beschichtung der seitlichen Ränder bis zu ihrer unteren Kante ist auf dem Tisch vorzugsweise ein aufragendes Pult vorgesehen, auf das der zu beschichtende Körper aufgelegt wird, so daß die Kunststoffolie mit Hilfe der Membran bis über die untere Kante der seitlichen Ränder hinaus und bis gegen die Tischfläche herabgezogen wird. Der Umriß des Pults sollte gegenüner demjenigen des Körpers leicht zurückspringen. Auch dies verbessert das Anhaften der Folie an den unteren Kanten der seitlichen Ränder. Zusätzlich zu dem bereits beschriebenen, auf die Kunststofffolie auflegbaren Rahmen kann ein im wesentlichen deckungsgleicher, auf den Tisch aufgelegter oder mit der Tischoberfläche verbundener Unterrahmen vorgesehen sein, durch den die Kunststoffolie im Zusammenwirken mit dem oberen Rahmen eingespannt wird.

EP 0 289 531 B1

Durch den Unterrahmen wird zwischen dem Pult und dem Unterrahmen eine den gesamten Körper umgebende Vertiefung gebildet, in die die Kunststoffolie durch die Membran hineingedrückt wird. Dabei wird die Folie gedehnt, so daß sie sich glatt an die Form der seitlichen Ränder des Gegenstandes anpaßt. Bei geeigneter Höhe bewirkt der Unterrahmen zugleich, daß die Kunststoffolie bereits zu einem frühen Zeitpunkt zuverlässig zwischen Unterrahmen und Oberrahmen eingespannt werden kann, bevor die Membran auf die Kunststoffolie auftrifft. Wird die Membran anschließend mit Druck beaufschlagt, so drückt sie die Kunststoffolie vollständig in die Vertiefung zwischen dem Pult und dem Unterrahmen hinein. Dabei dehnt und verformt sich die durch die Membran erwärmte Kunststoffolie, so daß sie sich glatt an die Hauptfläche und die Ränder des zu beschichtenden Gegenstandes anlegen kann.

Bei den in der Praxis am häufigsten zu beschichtenden rechteckigen, plattenförmigen Körpern weist der Oberrahmen und ggf. auch der Unterrahmen die Form eines entsprechenden, jedoch größere, Rechtecks auf, das den Gegenstand rundum mit Abstand umgibt. Dies führt dazu, daß der Rahmen an den Ecken aufgrund des Diagonalmaßes einen größeren Abstand zu dem Gegenstand aufweist als an den Längs- und Querseiten. Auf diese Weise wird die Folie in den Ecken stärker gedehnt, so daß sie sich auch hier faltenfrei anlegen kann.

Auch der Unterrahmen kann ebenso wie der Oberrahmen mit quergerichteten Bohrungen versehen sein. Diese Bohrungen ermöglichen einerseits einen Luftaustritt, wenn die Kunststoffolie durch die Membran herabgedrückt wird. Auch in diesem Falle können die quergerichteten Bohrungen in ein Kanalsystem integriert sein, über das die gefangene Luft positiv abgesaugt wird, oder daß sogar die Erzeugung eines Vakuum in der zwischen dem oder den Rahmen und dem Pult liegenden Vertiefung ermöglicht, das die Absenkung der Folie unterstützt. Dieses Vakuum kann allerdings allenfalls unterstützende Wirkung haben. Als einzige Quelle zur Erzeugung des erforderlichen Anpreßdruckes, wie es etwa bei dem in der US-PS 3 149 018 beschriebenen Verfahren dargestellt ist, würde ein Vakuum allenfalls für einfache Anwendungsfälle, nicht dagegen für die hier angestrebte, hochwertige Beschichtung von Möbelteilen einschließlich der umlaufenden Ränder dieser Teile ausreichen. Membranpressen der hier angesprochenen Art bauen Anpreßdrücke in der Größenordnung von 5 bar auf, während die Anpreßdrücke bei der Vakuumbeschichtung zwangsläufig unter 1 bar liegen.

Der Tisch kann seinerseits beheizt sein, so daß insbesondere in der das Pult umgebenden Vertiefung Wärme aufsteigt, die die Folie in dem zu dehnenden Bereich zusätzlich erwärmt. Die Beheizung der Folie von unten ist auch möglich, wenn auf dem Tisch aus herstellungstechnischen Gründen eine verhältnismäßig dünne Metallplatte aufgelegt wird, die das Pult und ggf. den Unterrahmen trägt und ggf. abnehmbar oder seitlich verschiebbar ist, so daß die Platte seitlich außerhalb der Presse in gut zugänglicher Position mit den zu beschichtenden Gegenständen bestückt werden kann. Eine von dem Tisch abnehmbare Platte bietet andererseits die Möglichkeit, bei einem Wechsel der Form des zu beschichtenden Gegenstandes eine entsprechende Umrüstung vorzunehmen.

Im folgenden werden bevorzugte Ausführungsbeispiele der Erfindung anhand der beigefügten Zeichnung näher erläutert.

Fig. 1 ist eine schematische Ansicht einer erfindungsgemäßen Vorrichtung;

Fig. 2 zeigt eine Teildraufsicht zu Fig. 1;

Fig. 3 ist eine schematische Ansicht einer Membranpresse mit den erfindungsgemässen Vorrichtungsteilen;

Fig. 4 ist eine schematische perspektivische Draufsicht auf einen Tisch einer Membranpresse mit einer größeren Anzahl von zu beschichtenden Körpern in rasterförmiger Anordnung;

Fig. 5 ist ein senkrechter Teilschnitt durch eine erfindungsgemäß ausgestaltete Membranpresse in einer Stellung, die sich vor einem Beschichtungsvorgang ergibt;

Fig. 6 ist ein entsprechender Teilschnitt im Augenblick des Auftreffens der Membran auf die Kunststoffolie.

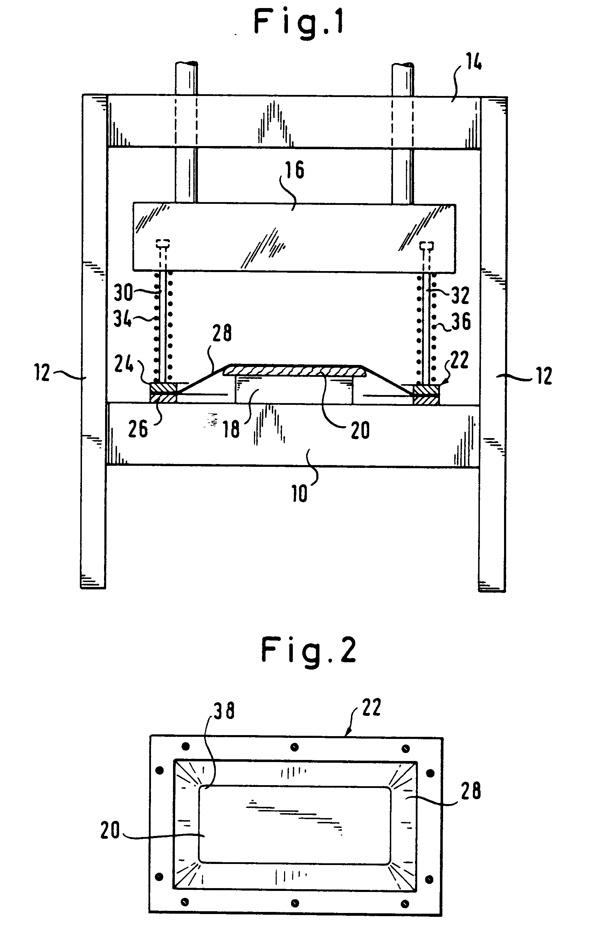

In Fig. 1 ist im Sinne eines zur Erläuterung dienenden Beispiels eine Vorrichtung gezeigt, die einen Tisch 10, Stützen 12 und ein Querhaupt 14 umfaßt. Unter dem Querhaupt 14 ist ein absenkbarer Oberstempel 16 aufgehängt, dessen nicht gezeigte untere Druckfläche in an sich bekannter Weise als aufblasbares Druckkissen ausgebildet ist.

Auf dem Tisch 10 befindet sich eine Halterung 18, auF der ein zu beschichtender Körper in der Form einer rechteckigen Türplatte 20 eines Küchenschrankes liegt.

Diese Türplatte 20 ist auch in Fig. 2 dargestellt. Die umlaufenden Kanten und Ecken der Türplatte sind abgerundet.

Ein Rahmen 22 umgibt die Türplatte 20 allseitig. Die Form und Größe des Rahmens ist der Form und Größe der Türplatte angepaßt, und der Rahmen folgt der Außenkontur der Türplatte 22 mit im wesentlichen gleichbleibendem Abstand. Der Rahmen 22 besteht beispielsweise aus zwei deckungsgleichen Rahmenteilen 24,26, die auseinandergenommen werden können und zwischen denen eine Kunststoffolie 28 eingespannt werden kann. Zum Festhalten der Kunststoffolie 28 werden die Rahmenteile mit Hilfe von nicht gezeigten Spanneinrichtungen zusammengespannt.

Der Rahmen kann nach dem Einspannen der Folie und nach dem Erwärmen der Folie von Hand über die Türplatte 20 abgesenkt werden. Zweckmäßiger ist jedoch eine automatische Anhebung und Absenkung des Rahmens in Zuordnung zu der senkrechten Bewegung des Oberstempels 16. Im dargestellten Beispiel ist der Rahmen an Führungsstangen 30,32 aufgehängt, die senkrecht verschiebbar in dem Oberstempel 16 geführt sind. Druckfedern 34,36 spannen den Rahmen 22 nach unten in bezug auf den Oberstempel 16 vor, so daß der Rahmen 22 zwar in Abstand vor des Oberstempel 16 abgesenkt wird, die Absenkbewegung des Oberstempels 16 nach dem Auftreffen des Rahmens 22 auf dem Tisch 10 jedoch fortgesetzt werden kann.

Beim Absenken des Rahmens 22 legt sich die Folie 28 zunächst glatt gegen die obere Oberfläche der Türplatte 20. Beim Auftreffen der von innen beheizten Membran auf die Folie wird diese erwärmt. Sie wird sodann durch die Membran weiter heruntergezogen, so daß sie sich den seitlichen Schnittflächen der Türplatte 20 nähert und dabei gedehnt und verformt wird. Dabei erfolgt eine verstärkte Dehnung in denjenigen Bereichen der Türplatte 20, die vom Umfang der Türplatte nach außen vorspringenden, wie etwa im Bereich der mit 38 bezeichneten Ecke gemäß Fig. 2. Durch die starke Dehnung der Kunststoffolie 28 in diesem Bereich wird überschüssiges Material abgezogen, und zugleich wird die Folie durch Verformung weitgehend der Form der Ecke angepaßt. Anschließend kann die Folie mit Hilfe des Druckkissens faltenfrei angedrückt werden.

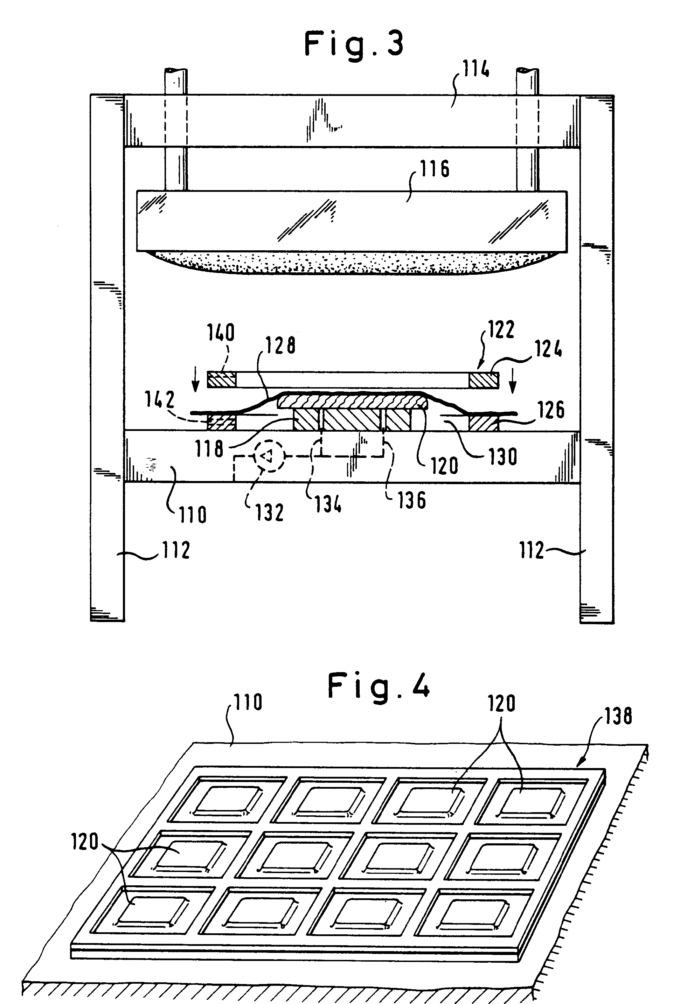

Eine Membranpresse gemäß Fig. 3 umfaßt eine Tisch 110 mit zwei Stützen 112 und einem Querhaupt 114. Unter dem Querhaupt ist ein absenkbarer Oberstempel 116 aufgehängt, an dessen Unterseite eine nicht bezeichnete Membran erkennbar ist. Diese Membran bildet ein Druckkissen zum Andrücken einer Folie gegen einen Körper, wie später erläutert werden wird. Oberhalb der Membran befinden sich im Oberstempel 116 Heizeinrichtungen, die die Membran und über diese die Folie beim Beschichtungsvorgang erwärmen.

Auf dem Tisch 110 befindet sich ein rechteckiges, plattenförmiges, gegenüber dem Tisch erhabenes Pult 118, auf dem eine Türplatte 120 als Beispiel für einen zu beschichtenden Körper liegt. Ein rechteckiger Rahmen 122 umgibt die Türplatte 120 allseitig mit gleichbleibendem Abstand.

Der Rahmen 122 besteht im dargestellten Beispiel aus zwei deckungsgleichen Rahmenteilen 124,126. Das untere Rahmenteil 126 liegt unmittelbar auf dem Tisch 110 und verbleibt dort ständig, kann also auch integraler Bestandteil des Tisches sein.

Auf die Türplatte 120 und das untere Rahmenteil 126 wird eine Kunststoffolie 128 aufgelegt. Sodann wird das obere Rahmenteil 124 in deckungsgleicher Position oberhalb des unteren Rahmenteils 126 auf die Kunststoffolie 128 gelegt.

Beim Absenken des Oberstempels erfaßt dessen Membran das obere Rahmenteil 124 und drückt dieses fest gegen das untere Rahmenteil 126, so daß die Folie eingespannt wird. Wenn die Kunststoffolie 128 ausreichend erwärmt ist, wird sie durch die Membran in den mit 130 bezeichneten Zwischenraum zwischen dem Pult 118 und dem Rahmen 122 gedrückt, bis sie diesen Zwischenraum vollständig ausfüllt. Dabei wird die Kunststoffolie 128 erheblich gedehnt und verformt, und sie legt sich faltenfrei um die gesamten Seitenflächen und insbesondere auch um die Ecken der Türplatte 120 herum. Anschließend werden der Oberstempel 116 und das obere Rahmenteil 124 angehoben, und die überstehende Folie wird von der beschichteten Türplatte 120 abgeschnitten.

Das Auflegen und Abheben des oberen Rahmenteils 124 kann von Hand erfolgen, kann jedoch auch in geeigneter Weise mechanisiert sein. Beispielsweise kann das obere Rahmenteil federnd unter dem Oberstempel 116 aufgehängt sein.

In Fig. 3 ist im übrigen eine Saugpumpe 132 mit zwei Saugleitungen 134,136 angedeutet. Die Saugleitungen 134,136 treten durch das Pult 118 hindurch in nicht bezeichnete Bohrungen in der Rückseite der Türplatte 120 ein. Auf diese Weise können Gase aus dem Inneren der Türplatte abgesaugt werden. Zugleich wird der auf die Türplatte 120 vor dem Auflegen der Folie aufzubringende Klebstoff tief in die Poren der Spanplatte hineingesaugt, und auch die Anlage der Folie kann durch Ansaugen zusätzlich verbessert werden, sofern dies erforderlich ist.

Fig. 4 ist eine schematischen perspektivische Ansicht eines Tisches mit einer Anzahl von rechteckigen Körper, 120, beispielsweise Türplatten. Die gezeigten zwölf Türplatten können in einem Arbeitsgang beschichtet werden. In diesem Fall ist ein rasterförmiger Rahmen 138 vorgesehen, der alle Türplatte in gleicher Weise umgibt.

Die Höhe des Pultes 118 und des unteren Rahmenteils 126 bzw. die Tiefe des zwischen beiden liegenden Zwischenraums 130 sind so gewählt, daß die Kunststoffolie, die vollständig bis zum Boden des Zwischenraums 130 herabgedrückt wird, ausreichend gedehnt und verformt werden kann.

Durch die Verwendung des Rahmens 122 kann der Fall eintreten, daß beim Auftreffen der Membran auf den Rahmen und beim anschließenden Formvorgang Luftpolster eingefangen werden. Luftpolster zwischen der Membran und der Kunststoffolie 128 können dazu führen, daß der Druck, den die Membran ausübt, nur unzureichend auf die Folie übertragen wird. Im übrigen ist es für den Formvorgang wesentlich, daß die durch den Tisch, das unteren Rahmenteil und die Folie eingeschlossene Luft entweichen kann. Aus diesen Gründen

EP 0 289 531 B1

können in den beiden Rahmenteilen 124, 126 quergerichtete Bohrungen oder Nuten vorgesehen sein, die ein Entweichen der eingefangenen Luft gestatten. Diese Bohrungen oder Nuten sind in Fig. 3 gestrichelt angedeutet und mit 140,142 bezeichnet. Bei der Ausführungsform gemäß Fig. 4 können sich die genannten Bohrungen oder Nuten durch alle Stege erstrecken, so daß eine Entlüftung von innen nach außen möglich ist.

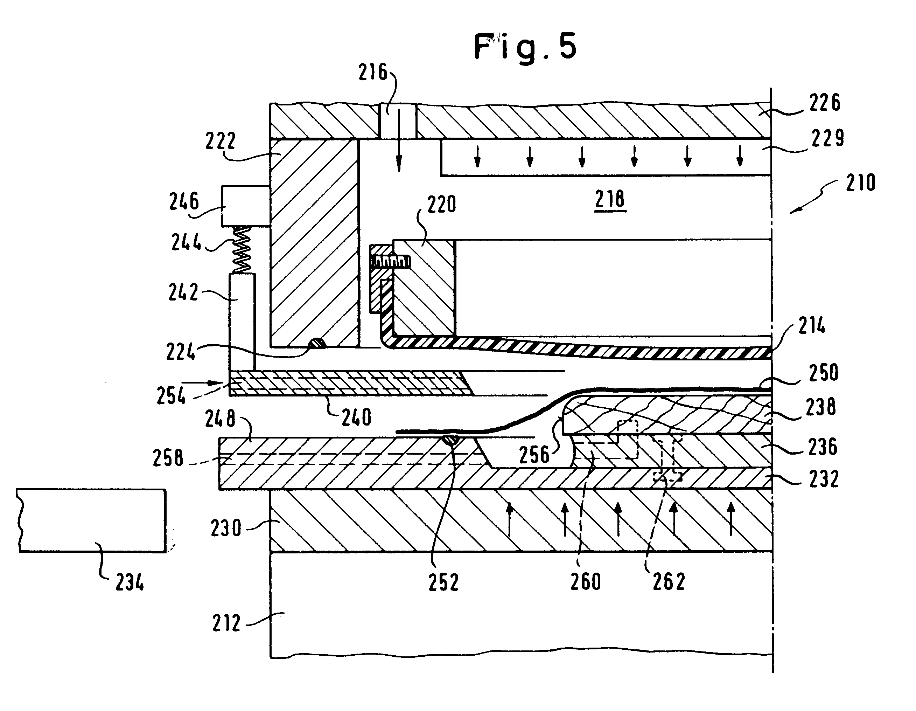

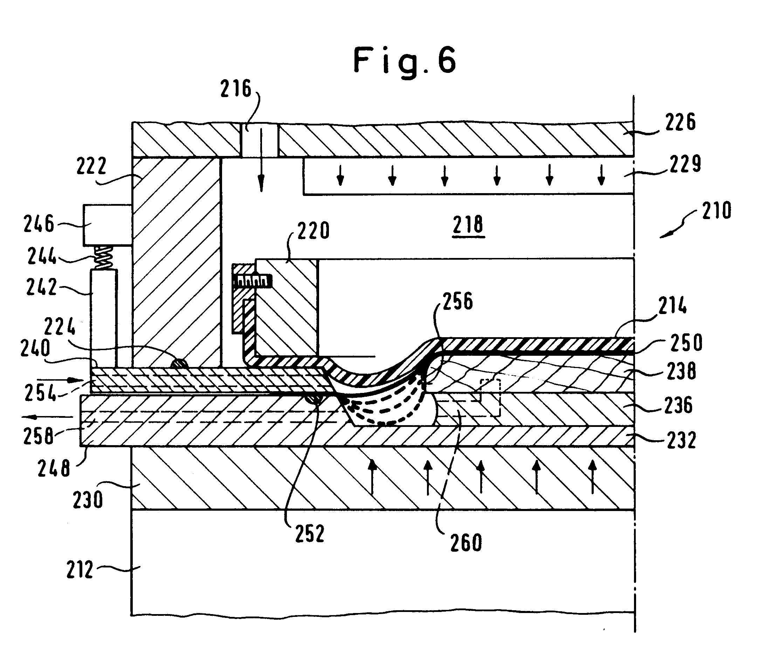

Die in Fig. 5 und 6 andeutungsweise gezeigte Membranpresse umfaßt ein insgesamt mit 210 bezeichnetes, an einem nicht dargestellten Gestell aufwärts und abwärts bewegliches Druckkissen und einen unterhalb des Druckkissens befindlichen Tisch 212. Das Druckkissen 210 wird im wesentlichen gebildet durch eine Membran 214 die eine mit Luftdruck über eine Öffnung 216 beaufschlagbare Druckkammer 218 nach unten abschließt. Die Membran 214 ist auf ihrem Umfang eingespannt in eine rahmenförmige Halterung 220 die in nicht gezeigter Weise innerhalb der Druckkammer 218 aufgehängt ist. Zu den Außenseiten hin wird die Druckkammer 218 durch einen Dichtrahmen 222 abgeschlossen, in deren unter Oberfläche eine Dichtleiste 224 eingelassen ist. Unterhalb der mit 226 bezeichneten oberen Deckplatte befinden sich nicht im einzelnen dargestellte Heizstrahler 229 die Wärme in Pfeilrichtung nach unten abgeben und die Menbran 214 erwärmen.

Der Tisch 212 ist in seinem oberen Bereich als Heizplatte 230 ausgebildet. Zu diesem Zweck sind beispielsweise nicht gezeigte Heizdrähte in den Tisch eingebettet, oder es sind Fluidkanäle für ein Heizfluid vorgesehen. Auf diese Weise wird Wärme nach oben in Richtung der nicht bezeichneten Pfeile abgegeben. Auf dem als Heizplatte ausgebildeten oberen Bereich des Tisches liegt eine verhältnismäßig dünne Platte 232 insbesondere aus Metall, die die eigentliche Tischfläche bildet. Die Verwendung einer nur lösbar mit dem Tisch verbundenen Platte hat den Vorteil, daß diese etwa beim Werkstückwechsel oder auch bei der Umrüstung auf ein anderes Werkstück abgenommen oder insbesondere seitlich auf einen angedeuteten angrenzenden Tisch 234 verschoben werden kann, damit die notwendigen Arbeiten außerhalb der Presse ohne Behinderung durch das Druckkissen und ohne Blockierung etwaiger anderweitiger Arbeitsvorgänge durchgeführt werden können.

Auf der Platte 232 ist ein plattenförmiges Pult 236 lösbar befestigt. Das Pult 236 weist beispielsweise eine Höhe von 10 bis 20 mm, vorzugsweise von mindestens 14 mm auf. Das Pult 246 dies als Aufnahme für einen zu beschichtenden Gegenstand, beispielsweise eine rechteckige Türplatte 238 mit abgerundeten Ecken und Kanten, wie sie Fig. 5 angedeutet ist.

Unterhalb des Druckkissens 210 ist ein Rahmen 240 aufgehängt, der die Türplatte 238 auf deren gesamten Umfang mit auf allen Seiten gleicher Breite umgibt und bei einer rechteckigen Türplatte ebenfalls die Form eines Rechtecks aufweist. Der Rahmen 240 ist an der Außenseite des Dichtrahmens 222 mit Hilfe von senkrechten Schäften 242, Federn 244 und an dem Dichtrahmen 222 angebrachten Ansätzen 246 federnd aufgehängt.

Unterhalb des Rahmens 240 befindet sich ein im wesentlichen deckungsgleicher, auf der Platte 232 befestigter oder einstückig mit dieser ausgebildeter Unterrahmen 248. Auch dieser Unterrahmen 248 umgibt die Türplatte 238 bzw. das Pult 236 auf dem gesamten Umfang mit gleichbleibendem Sietenabstand.

Beim Beschichten einer Türplatte 238 mit einer Kunststoffolie wird zunächst bei geöffneter Presse eine Kunststofffolie 250 auf die Türplatte 238 und den Unterrahmen 248 aufgelegt, wie es in Fig. 5 gezeigt ist. Wird nun das Druckkissen abgesenkt, so trifft zunächst der obere Rahmen 240 auf den Unterrahmen 248. Dabei wird die Kunststoffolie 250 zwischen den beiden Rahmen eingespannt. Eine in den Unterrahmen 248 eingelassene Dichtleiste verstärkt dabei die Klemmwirkung. Die Rahmen 240,248 können auf den einander zugewandten Flächen auch die Riffelung oder dergleichen aufweisen, die die Klemmwirkung erhöht. Nachdem die Rahmen 240,248 die Kunststoffolie 250 auf die beschriebene

Weise eingespannt haben, drückt sich beim weiteren Absenken des Druckkissens die Feder 244 zusammen. Der Dichtrahmen 222 legt sich auf die obere Oberfläche des Rahmens 240. Die Membran 214 legt sich im gesamten Innenbereich des Rahmens 240 auf die Kunststoffolie 250, wie es in Fig. 6 gezeigt ist, und erwärmt die Kunststoffolie. Der Rahmen 240 weist waagerechte Bohrungen 254 auf, durch die die zwischen der Kunststoffolie 250 und der Membran 214 gefangene Luft nach außen entweichen kann, da einzelne Lufttaschen die Übertragung von Wärme und Druck durch die Membran beeinträchtigen würden.

Nunmehr wird der Druck innerhalb des Druckkissens nach und nach bis auf etwa 5 bar gesteiert. Dabei legt sich die Membran 218 glatt gegen die obere Oberfläche der Türplatte 238 an, und sie wird im übrigen vollständig in die Vertiefung zwischen den beiden Rahmen 240,248 einerseits und dem Pult 236 mit der Türplatte 238 andererseits hineingedrückt, bis sie gegen die Oberfläche der Platte 232 aliegt. Da die Kunststoffolie 250 durch die Membran 214 von oben und die Heizplatte 230 bzw. die Platte 232 von unten erwärmt worden ist, kann sie dieser Dehnungsbewegung folgen. Sie legt sich dabei vollständig glatt gegen die äußeren Ränder 256 der Türplatte 238 an. Da das Pult 236 die Türplatte 238 in einer bestimmten Mindesthöhe über der Platte 232 hält und im übrigen in seinem Umriß um einige Millimeter gegenüber der Türplatte 238 zurückgesetzt ist, kann die Kunststoffolie 250 bis zur unteren, umlaufenden Kante der Türplatte 238 zuverlässig und faltenfrei an den Rändern 256 verklebt werden. An den vier Ecken eines rechteckigen Körpers, wie etwa einer Türplatte, oder an entsprechenden Vorsprüngen anderer Körper, sollte die Kuntstoffolie stärker als an den glatten Rändern 256 gedehnt werden. Dies läßt sich beispielsweise erreichen durch Verwendung rechteckiger Rahmen 240,248 in Verbindung mit einer rechteckigen Türplatte 238, da in diesem Falle bei gleichbleibenden Seitenabständen zwischen der Türplatte und den Rahmen in den Ecken der Türplatte wegen des größere Diagonalmaßes eine besonderes starke Verformung stattfindet. Durch diese Verformung wird erreicht, daß sich die Kunststoffolie ohne Faltenbildung anlegt.

Gemäß Fig. 5 und 6 weist auch der Unterrahmen 248 waagerechte Bohrungen 258 auf. Diese Bohrungen 258 gestatten ebenfalls einen Luftaustritt beim Anbsenken der Membran 214 mit der Kunststoffolie 250 in die Vertiefung zwischen den Rahmen 240,248 und der Türplatte 238.

Wenn der Beschichtungsvorgang beendet ist, wird das Druckkissen 210 wieder angehoben. Dabei kann der Fall eintreten, daß die verhältnismäßig heiße Membran 214 and er Kunststoffolie 250 anhaftet und diese zumindest teilweise nach oben mitnimmt, so daß die Kunststoffolie wiederum von der Türplatte 238 gelöst oder zumindest teilweise zerstört wird. Dies läßt sich dadurch verhindern, daß die Bohrungen 254 im oberen Rahmen 240 beim Anheben des Druckkissens 210 zum Einblasen von Kühlluft benutzt werden. Durch Kühlluft wird einerseits die Kunststoffolie gekühlt und die ihrer Haftfähigkeit verringert, und zum anderen werden die Membran 214 und die Kunststoffolie 250 auseinandergedrückt.

Im oberen Rahmen können in nicht gezeigter Weise entweder gesonderte Bohrungen 254 für die Entlüftung einerseits und das Einblasen von Kühlluft andererseits vorgesehen sein. Die Bohrungen 254 können jedoch auch zu einem Kanalsystem zusammmgenfaßt sein, das mit Hilfe geeigneter Umschaltventile während der Entlüftung mit der Umgebund und in der Kühlphase mit einer geeigenten Kühlgasquelle verbunden wird.

Die Bohrungen in dem Unterrahmen 248, die eine Entlüftung des Zwischenraumes zwischen den Rahmen 240,248 und der Türplatte 238 bzw. dem Pult 236 ermöglichen, können ebenfalls zu einem nicht gezeigten Kanalsystem verbunden sein, das über geeignete Ventile mit einer Unterdruckquelle in Verbindung gesetzt werden kann. Dadurch ergibt sich die Möglichkeit, die Entlüftung des erwähnten Zwischenraumes zu beschleunigen oder darüber hinaus ein mehr oder weniger starkes Vakuum in dem Zwischenraum zu erzeugen, durch das die Folie nach unten gezogen wird.

Sofern der zu beschichtende Körper luftdurchlässig ist, wie es beispielsweise bei Spanplatten oder Stauplatten aus Holzmaterialien zumeist der Fall ist, kann auch an die Rückseite des Körpers ein Unterdruck angelegt werden, der die Folie fest in die Poren der Sichtseite hineinzieht. Zu diesem Zweck ist in dem Pult 236 ein Kanal 260 angedeutet, der den Zwischenraum zwischen den Rahmen 240,248 und dem Pult 236 mit der Rückseite der Türplatte 238 verbindet. Der in dem Zwischenraum gebildete Unterdruck setzt sich daher bis zur Rückseite der Türplatte fort.

Das Pult 236 kann aus Einzelteilen zusammengesetzt sein, so daß die Möglichkeit besteht, jeweils entsprechend der Größe des zu beschichtenden Körpers zusammenzusetzen. Zu diesem Zweck sind lediglich angedeutete Schienen 262 vorgesehen, die als Halterung für die zusammengesetzten Teile des Pultes dienen und unter Umständen auch eine Verschiebung des Pultes gestatten.

Mit dem erfindungsgemäßen Verfahren und der erfindungsgemäßen Vorrichtung können nicht nur Kunststoffolien aufgebracht werden, sondern auch andere, folienförmige Materialien, Leder, Furnier, Filz etc..

Bei der in Fig. 5 und 6 gezeigten Ausführungsform können im oberen und unteren Rahmen Thermofühler vorgesehen sein, die eine relativ genaue Messung und Steuerung der Temperatur der Folie ermöglichen.

## Patentansprüche

1. Verfahren zur Kunststoffbeschichtung von dreidimensionalen Körpern, bei dem eine Kunststoff-Folie (28, 128,250) auf einen Körper (20, 120,238) aufgelegt und unter Erwärmung mit Hilfe eines Druckkissens (16, 116) einer Membranpresse angedrückt wird, deren Membran so flexibel ist, daß sie sich vollständig glatt gegen die äußeren Ränder des zu beschichtenden Körpersdrücken läßt, dadurch **gekennzeichnet**, daß die Folie (28, 128,250) durch einen den Körper (20, 120, 238) mit Abstand umgebenden Rahmen (22,122,240) eingespannt wird und daß die Folie beim Andrücken mit Hilfe des Druckkissens durch den Rahmen gehalten wird.

2. Membranpresse zur Durchführung des Verfahrens gemäß Anspruch 1, mit einer Membran, die so flexibel ist, daß sie sich vollständig glatt gegen die äußeren Ränder eines zu beschichtenden Körpers drücken läßt, einem Tisch (10, 110) zur Aufnahme eines zu beschichtenden Körpers, einem absenkbaren Druckkissen (16, 116) zum Andrücken einer Kunststoff-Folie an den Körper, und einer Heizeinrichtung (229) zur Erwärmung der Kunststoff-Folie, **gekennzeichnet** durch einen dem Umriß des Körpers (20,120,238) mit Abstand folgenden, absenkbaren Rahmen (22,122,240) zum Einspannen der Kunststoff-Folie (28).

3. Membranpresse nach Anspruch 2, dadurch **gekennzeichnet**, daß der Rahmen (22,122,240) mit Abstand unterhalb des Druckkissens (16, 116) aufgehängt und entgegen der Wirkung von Federn (34,36,244) gegen dieses anhebbar ist.

4. Membranpresse nach Anspruch 2 oder 3, dadurch **gekennzeichnet,** daß der Rahmen (22,122,240) rechteckig ist und gleichbleibenden Abstand gegenüber den Rädern des zu beschichtenden Körpers aufweist.

5. Membranpresse nach einem der Ansprüche 2 bis 4, dadurch **gekennzeichnet,** daß der Rahmen (122) ein dem Tisch (110) zugeordnetes unteres Rahmenteil (126) und ein anhebbares und absenkbares, auf die Folie (128) auflegbares oberes Rahmenteil (124) umfaßt.

6. Membranpresse nach Anspruch 5, dadurch **gekennzeichnet,** daß das untere Rahmenteil (126) integraler Bestandteil des Tisches (110) ist.

7. Membranpresse nach Anspruch 5 oder 6, dadurch **gekennzeichnet,** daß der Tisch (110) ein gegenüber der Tischfläche erhabenes Pult (118) zur Aufnahme des Körpers (120) aufweist, dessen Umriß kleiner als derjenige des Körpers ist.

8. Membranpresse nach einem der Ansprüche 2 bis 7, zur gleichzeitigen Beschichtung mehrerer dreidimensionalen Körper, dadurch **gekennzeichnet,** daß der Rahmen (138) rasterförmig entsprechend der Anordnung der Körper (120) auf dem Tisch ausgebildet ist,

9. Membranpresse nach einem der Ansprüche 5 bis 8, **gekennzeichnet** durch eine Absaugvorrichtung (132,134,136) zum Absaugen von Gasen von der Rückseite des Körpers (120).

10. Membranpresse nach Anspruch 9, dadurch **gekennzeichnet,** daß die Absaugvorrichtung Saugleitungen (134,136) umfaßt, die durch Bohrungen in der Rückseite des Körpers (120) in diesen eintreten.

11. Membranpresse nach einem der Ansprüche 2 bis 10, dadurch **gekennzeichnet,** daß in dem Rahmen (122,240) bzw. dem oberen und/oder unteren Rahmenteil (124,126) quergerichtete Bohrungen (140,254) oder Nuten (142) zur Entlüftung des Rahmeninneren und/oder zur Luftzufuhr in das Rahmeninnere vorgesehen sind.

12. Membranpresse nach Anspruch 11, dadurch **gekennzeichnet,** daß die äußeren Enden der Bohrung (254) mit einer Druckluftquelle verbunden sind.

13. Membranpresse nach Anspruch 11 oder 12, dadurch **gekennzeichnet,** daß die äußeren Enden der Bohrungen mit einer Kühlgasquelle verbunden sind,

14. Membranpresse nach einem der Ansprüche 11 bis 13, dadurch **gekennzeichnet,** daß die Bohrungen (254) in dem Rahmen (240) in ein Kanalsystem integriert sind, das wahlweise die Entlüftung des Rahmeninneren und die Einleitung von Druck und/oder Kühlgas gestattet.

15. Membranpresse nach einem der Ansprüche 7 bis 14, dadurch **gekennzeichnet,** daß das untere Rahmenteil (126, 248) durchgehende Bohrungen (258) zur Entlüftung des Zwischenraumes zwischen dem unteren Rahmenteil (248) und dem Pult (236) beim Andrücken der Kunststoff-Folie (250) aufweist.

16. Membranpresse nach einem der Ansprüche 2 bis 15, dadurch **gekennzeichnet,** daß der Tisch (212) im oberen Bereich als Heizplatte ausgebildet ist.

## Claims

1. A method of coating three-dimensional bodies with synthetic plastics material, in which a synthetic plastics film (28, 128, 250) is placed on a body (20, 120, 238) and, accompanied by heating by means of a pressure pad (16, 116), is pressed against a membrane press of which the membrane is so flexibel that it can be pressed completely smoothly against the outer edges of the body which is to be coated, characterised in that the film (28, 128, 250) is stretched by a frame (22, 122, 240) which encloses the body (20, 120, 238) at a distance and in that the film is supported by the frame when pressure is applied by means of the pressure pad.

2. A membrane press for carrying out the method according to Claim 1, with a membrane which is so flexible that it can be pressed completely smoothly against the outer edges of a body which is to be coated, and with a table (10, 110) to receive a body which is to be coated, and with a lowerable pressure pad (16, 116) for pressing a synthetic plastics film against the body and with a heating arrangement (229) for heating the synthetic plastics film, characterised by, for stretching the synthetic plastics film (28), a frame which can be lowered and which at a distance follows the contours of the body (20, 120, 238).

3. A membrane press according to Claim 2, characterised in that the frame (22, 122, 240) is suspended at a distance below the pressure pad (16, 116) and can be raised against this latter against the action of springs (34, 36, 244).

4. A membrane press according to Claim 2 or 3, characterised in that the frame (22, 122, 240) is rectangular and is at a constant distance from the edges of the body to be coated.

5. A membrane press according to one of Claims 2 to 4, characterised in that the frame (122) comprises, associated with the table (110) a bottom frame part (126) and a raisable and lowerable upper frame part (124) which can be laid on the film (128).

6. A membrane press according to Claim 5, characterised in that the lower frame part (126) is an integral constituent part of the table (110).

7. A membrane press according to Claim 5 or 6, characterised in that the table (110) has a panel (118) which is raised in comparison with the table surface and which serves to accommodate the body (120), its contours being smaller than those of the body.

8. A membrane press according to one of Claims 2 to 7, for the simultaneous coating of a plurality of three-dimensional bodies, characterised in that the frame (138) is of grid-like construction, corresponding to the dispositin of the bodies (120) on the table.

9. A membrane press accoriding to one of Claims 5 to 8, characterised by an extraction device (132, 134, 136) for extracting gases from the back of the body (120).

10. A membrane press according to Claim 9, characterised in that the extraction device comprises suction lines (134, 136) which enter the body (120) through bores in the back thereof.

11. A membrane press according to one of Claims 2 to 10, characterised in that transversely directed bores (140, 254) or grooves (142) for venting the frame interior and/or for feeding air into the frame interior are provided in the frame (122, 240) or the upper and/or lower frame part (124, 126).

12. A membrane press according to Claim 11, characterised in that the outer ends of the bore (254) are connected to a compressed air source.

13. A membrane press according to Claim 11 or 12, characterised in that the outer ends of the bores are connected to a cooling gas source.

14. A membrane press according to one of Claims 11 to 13, characterised in that the bores (254) in the frame (240) are integrated into a system of passages which optionally permits venting of the frame interior and the introduction of pressure and/or cooling gas.

15. A membrane press according to one of Claims 7 to 14, characterised in that the lower frame part (126, 248) has continuous bores (258) for venting the intermediate space between the lower frame part (248) and the panel (236) when pressure is being applied to the synthetic plastics film (250).

16. A membrane press according to one of Claims 2 to 15, characterised in that the table (212) is in its upper zone constructed as a heater plate.


**Revendications**

1. Procédé de revêtement de corps tridimensionnels avec des matières plastiques dans lequel une feuille de matière plastique (28, 128, 250) est posée sur un corps (20, 120, 238) et appliquée, sous l'effet de la chaleur, à l'aide d'un coussin de pression (16, 116) d'une presse à membrane dont la membrane est suffisamment flexible pour pouvoir être appliquée parfaitement à plat contre les bords extérieurs du corps à revêtir, **caractérisé en ce** que la feuille (28, 128, 250) est fixée par un cadre (22, 122, 240) qui entoure à distance le corps (20, 120, 238), et que la feuille est maintenue par le cadre lors de l'application au moyen du coussin de pression.

2. Presse à membrane pour la mise en oeuvre du procédé selon la revendication 1, comprenant une membrane suffisamment flexible pour pouvoir être appliquée de manière parfaitement à plat contre les bords extérieurs d'un corps à revêtir, une table (10, 110) pour la réception d'un corps à revêtir, un coussin de pression (16, 116) pouvant être abaissé et destiné à appliquer une feuille de matière plastique contre le corps, et un dispositif de chauffage (229) pour l'échauffement de la feuille de matière plastique, **caractérisée en ce** qu'elle comprend un cadre (22, 122, 240) pour la fixation de la feuille de matière plastique (28), qui suit à distance le contour du corps (20, 120, 238) et peut être abaissé.

3. Presse à membrane selon la revendication 2, caractérisée en ce que le cadre (22, 122, 240) est suspendu à distance en dessous du coussin de pression (16, 116) et peut être soulevé en direction de celui-ci contre l'action de ressorts (34, 36, 244).

4. Presse à membrane selon l'une des revendications 2 ou 3, caractérisée en ce que le cadre (22, 122, 240) est de forme rectangulaire et présente une distance constante par rapport aux bords du corps à revêtir.

5. Presse à membrane selon l'une des revendications 2 à 4, caractérisée en ce que le cadre (122) comprend un élément de cadre inférieur (126) associé à la table (110) et un élément de cadre supérieur (124) qui peut être déplacé vers le haut et vers le bas et posé sur la feuille (128).

6. Presse à membrane selon la revendication 5, caractérisée en ce que l'élément de cadre inférieur (126) fait partie intégrante de la table (110).

7. Presse à membrane selon l'une des revendications 5 ou 6, caractérisée en ce que la table (110) comprend pour la réception du corps (120) un pupitre (118) en relief par rapport à la surface de la table, dont le contour est plus petit que celui dudit corps.

8. Presse à membrane selon l'une des revendications 2 à 7, pour le revêtement simultané de plusieurs corps tridimensionnels, caractérisée en ce que le cadre (138) est réalisé en forme de grille conformément à la disposition des corps (120) sur la table

9. Presse à membrane selon l'une des revendications 5 à 8, caractérisée en ce qu'elle comprend un dispositif d'aspiration (132, 134, 136) pour l'aspiration des gaz à la face arrière du corps (120).

10. Presse à membrane selon la revendication 9, caractérisée en ce que le dispositif d'aspiration comprend des conduites d'aspiration (134, 136) qui pénètrent dans le corps (120) par des alésages réalisés dans la face arrière de celui-ci.

11. Presse à membrane selon l'une des revendications 2 à 10, caractérisée en ce que dans le cadre (122, 240) et respectivement dans l'élément de cadre supérieur et/ou inférieur (124, 126) sont prévus des alésages (140, 254) ou gorges (142) orientés transversalement et assurant la ventilation de l'intérieur du cadre et/ou l'arrivée d'air à l'intérieur du cadre

12. Presse à membrane selon la revendication 11, caractérisée en ce que les extrémités extérieures de l'alésage (254) sont raccordées à une source d'air comprimé.

13. Presse à membrane selon l'une des revendications 11 ou 12, caractérisée en ce que les extrémités extérieures des alésages sont raccordées à une source de gaz de refroidissement.

14. Presse à membrane selon l'une des revendications 11 à 13, caractérisée en ce que les alésages (254) sont intégrés dans le cadre (240) en un système de canaux qui permet, au choix, la ventilation de l'intérieur du cadre et la mise sous pression et/ou l'alimentation en gaz de refroidissement.

15. Presse à membrane selon l'une des revendications 7 à 14, caractérisée en ce que l'élément de cadre inférieur (126, 248) comporte des alésages (258) continus pour la ventilation de l'intervalle entre l'élément de cadre inférieur (248) et le pupitre (236) lors de l'application de la feuille de matière plastique (250).

16. Presse à membrane selon l'une des revendications 2 à 15, caractérisée en ce que la partie supérieure de la table (212) est conformée en plaque chauffante.

# Fig.1

# Fig.2

# Fig.3

# Fig.4

Fig.5

# Fig.6

EP 0 289 531 B1